# EUROPEAN PATENT APPLICATION

(11) **EP 2 120 430 A1**
(43) Date of publication of application: **18.11.2009**
(21) Application number: 08275017.5
(22) Date of filing: 15.05.2008
(51) Int. Cl.: H04M 1/23, H01H 13/85, H04M 1/02

(54) **Mobile phone with dialing keys of uneven surface**

(71) Applicant: Lin, Ke Shen, Taipei City 104 (TW)
(72) Inventor: Lin, Ke Shen, Taipei City 104 (TW)
(74) Representative: ip21 Ltd

(57) **Abstract**

A mobile phone includes an alphanumeric keypad on a first portion of a front surface thereof and including keys arranged in rows and columns; a direction key on a second portion of the front surface thereof; and a display on a third portion of the front surface thereof, wherein the keys of the keypad have an uneven surface so that dialing by touching the keys can be made, for example, in a dark environment or while driving. In one embodiment, the first portion is an upper portion of the front surface of the mobile phone, and the third portion is a lower portion of the front surface thereof. In another embodiment, the first portion is a lower portion of the front surface of the mobile phone, and the third portion is an upper portion of the front surface thereof.

## Description

### BACKGROUND OF THE INVENTION

### 1. Field of Invention

The invention relates to mobile phones and more particularly to a mobile phone having keys of the keypad with an uneven surface so that dialing by touching the keys can be made, for example, in a dark environment or while driving.

### 2. Description of Related Art

Conventionally, a user has to watch the keys of an alphanumeric keypad of a mobile phone when dialing. However, this mobile phone use (i.e., dialing) is not suitable while, for example, driving because it can increase the risk of road traffic accidents.

Most conventional types of mobile phone have the display provided on an upper portion of its phone body and the keypad, the function keys, and the direction key provided on lower and intermediate portions of its phone body. Thus, a user may instinctively push upward a mobile phone in the hand by the thumb so that the user may hold the mobile phone stably (i.e., hold the center of gravity of the mobile phone)

Thereafter, the user may use the thumb to press keys for dialing or do other operations. However, such design (i.e., the display above the keypad) does not take ergonomics and the center of gravity of the mobile phone into consideration. It is often that a mobile phone may fall if sufficient care is not taken when using the mobile phone. As a result, the mobile phone is damaged. Thus, a need for improvement exists.

### SUMMARY OF THE INVENTION

It is therefore one object of the invention to provide a mobile phone having keys of its keypad with an uneven surface so that dialing by touching the keys can be made, for example, in a dark environment or while driving.

The above and other objects, features and advantages of the invention will become apparent from the following detailed description taken with the accompanying drawings.

### BRIEF DESCRIPTION OF THE DRAWINGS

FIG. 1 is a top plan view of a first preferred embodiment of mobile phone according to the invention;
FIG. 2 is a view similar to FIG. 1 where keys of the alphanumeric keypad are arranged in a first configuration and shown in a detailed view in a circle;
FIG. 3 is a view similar to FIG. 1 where a row of the alphanumeric keypad is shown in a sectional view taken along line A--A";
FIG. 4 is a view similar to FIG. 2 where keys of the alphanumeric keypad are arranged in a second configuration and shown in a detailed view in a circle;
FIG. 5 is a view similar to FIG. 3 where a column of the alphanumeric keypad is shown in a sectional view taken along line B--B";
FIG. 6 is a view similar to FIG. 1 where the direction key is shown in a detailed view in a circle;
FIG. 7 is an environmental view of the mobile phone being held by the hand with the thumb pressing the key of the keypad;
FIG. 8 schematically depicts holding and dialing of the first preferred embodiment of mobile phone of the invention and holding and dialing of a conventional type of mobile phone as comparison;
FIG. 9 is a top plan view of a second preferred embodiment of mobile phone according to the invention;
FIG. 10 is a view similar to FIG. 9 where keys of the alphanumeric keypad are shown in a detailed view in a circle;
FIG. 11 is a view similar to FIG. 9 where the direction key is shown in a detailed view in a circle;
FIG. 12 is an environmental view of the mobile phone being held by the hand with the thumb pressing the key of the keypad;
FIG. 13 schematically depicts holding and dialing of the second preferred embodiment of mobile phone of the invention and holding and dialing of a conventional type of mobile phone as comparison;
FIG. 14 is a top plan view of a third preferred embodiment of mobile phone according to the invention;
FIG. 15 is a view similar to FIG. 14 where keys of the alphanumeric keypad are arranged in a first configuration and shown in a detailed view in a circle;
FIG. 16 is a view similar to FIG. 14 where a row of the alphanumeric keypad is shown in a sectional view taken along line A--A";
FIG. 17 is a view similar to FIG. 15 where keys of the alphanumeric keypad are arranged in a second configuration and shown in a detailed view in a circle;
FIG. 18 is a view similar to FIG. 16 where a column of the alphanumeric keypad is shown in a sectional view taken along line B--B"; and
FIG. 19 is a view similar to FIG. 14 where the direction key is shown in a detailed view in a circle.

### DETAILED DESCRIPTION OF THE INVENTION

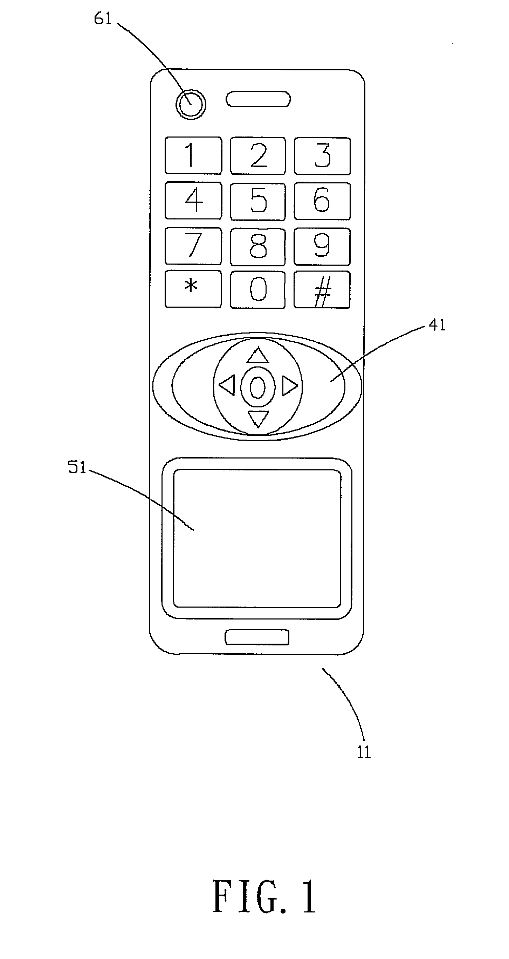

Referring to FIGS. 1 to 8, a mobile phone 11 in accordance with a first preferred embodiment of the invention is shown. The mobile phone 11 comprises an operation section on upper and intermediate portions of the front surface thereof, and a display on a lower portion on the front surface thereof. The operation section comprises an alphanumeric keypad 211 and a direction key 41 below the keypad 211. The display is implemented as an LCD (liquid crystal display) display 51 in this embodiment or an OLED (organic light-emitting diode) display in other embodiments.

A quick dialing key 61 is provided on the top left corner of the front surface of the mobile phone 11. A user may store his or her most frequently used phone numbers in a memory card. The user may browse through the list of stored numbers shown on the display 51. Thereafter, the user may initiate a call by pressing the quick dialing key 61 after finding the desired number shown on the display 51.

It is contemplated by the invention that a user can hold the center of gravity of the mobile phone 11 by one hand by configuring the mobile phone 11 as an ergonomic one as above. Therefore, benefits including easy dialing (i.e., the thumb being naturally disposed on the key of the keypad 211 when holding the mobile phone 11) and reducing the possibility of carelessly dropping the mobile phone 11 can be obtained.

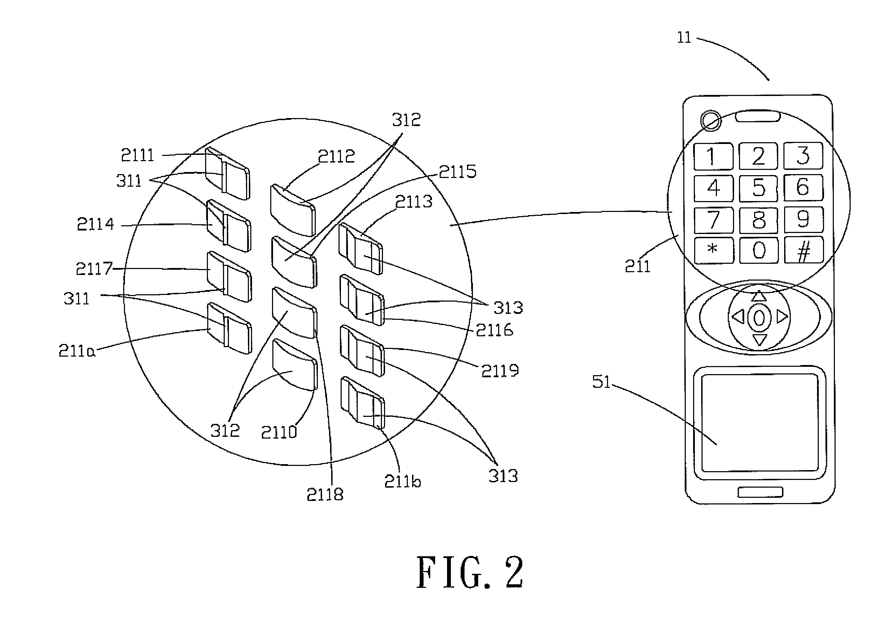

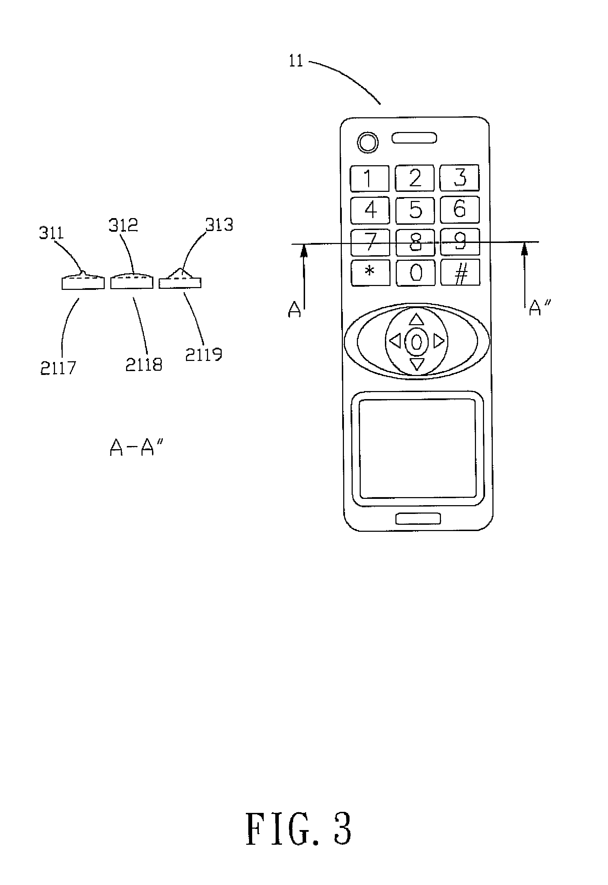

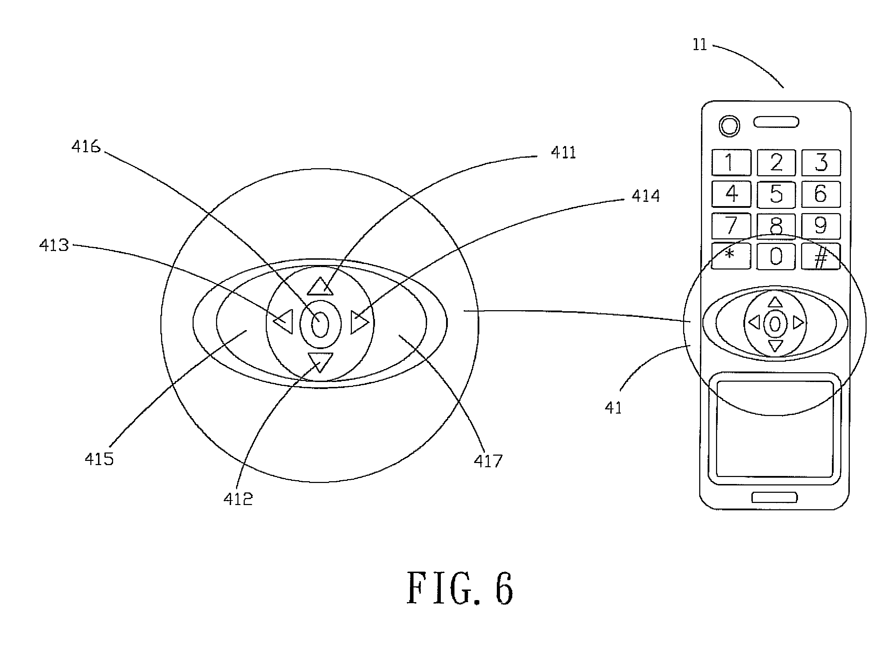

As shown in FIGS. 2 and 3, a first configuration of the keypad 211 is shown and the keypad 211 comprises a set of 3x4 (i.e., four rows and three columns) keys 2111, 2112, 2113, 2114, 2115, 2116, 2117, 2118, 2119, 211a, 2110, and 211b; and a direction key 41 (see FIG. 6). Each of the keys 2111, 2114, 2117, and 211a has a longitudinal, central ridge 311. Each of the keys 2112, 2115, 2118, and 2110 has a convex outer surface 312. Each of the keys 2113, 2116, 2119, and 211 b has a gable outer surface 313. The keypad 211 comprises 12 keys 0 to 9, * and #.

As shown in FIG. 6, the direction key 41 comprises four direction arrows 411, 412, 413, and 414; and three set keys 415, 416, and 417.

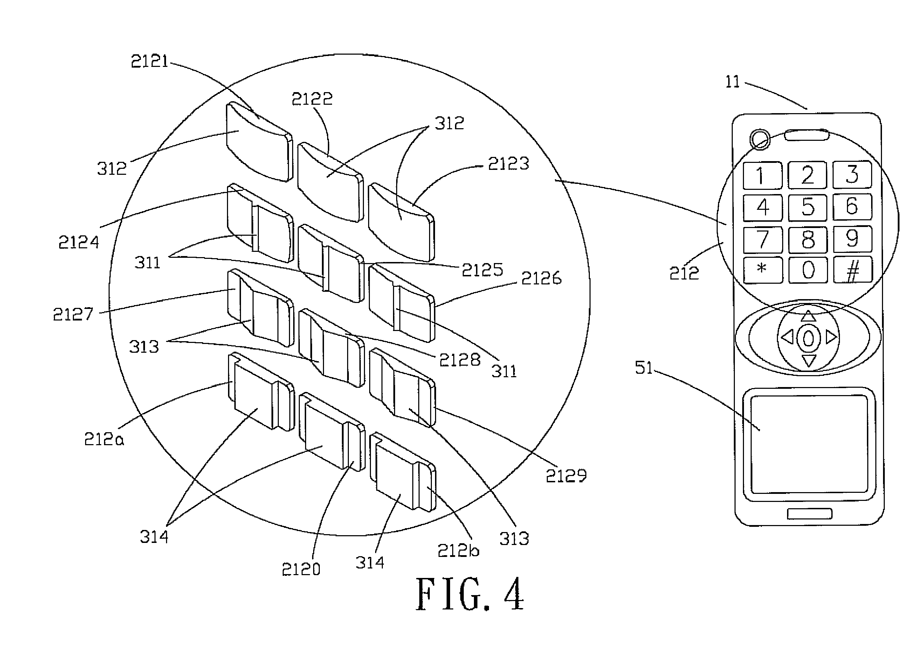

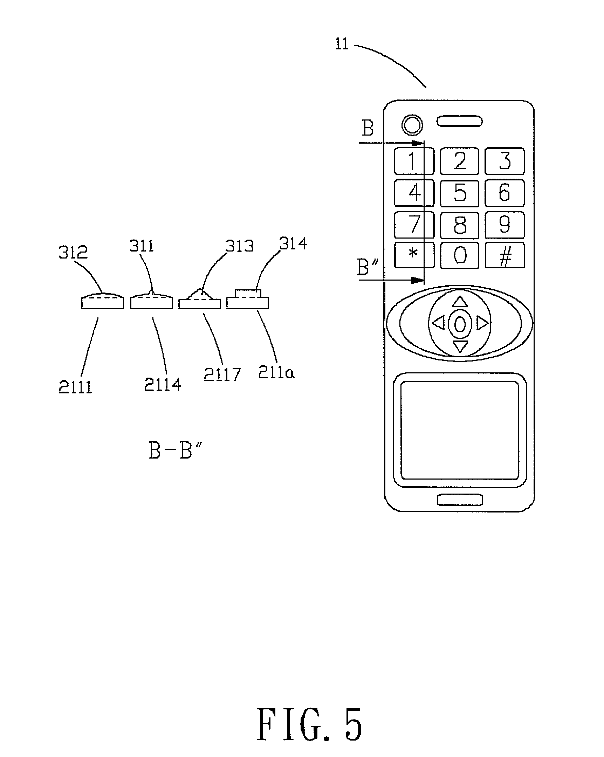

As shown in FIGS. 4 and 5, a second configuration of the keypad 212 is shown and the keypad 212 comprises a set of 3x4 (i.e., four rows and three columns) keys 2121, 2122, 2123, 2124, 2125, 2126, 2127, 2128, 2129, 212a, 2120, and 212b; and a direction key 41 (see FIG. 6). Each of the keys 2121, 2122, and 2123 has a convex outer surface 312. Each of the keys 2124, 2125, and 2126 has a longitudinal, central ridge 311. Each of the keys 2127, 2128, and 2129 has a gable outer surface 313. Each of the keys 212a, 2120, and 212b has a raised platform 314 on its outer surface The keypad 212 comprises 12 keys 0 to 9, * and #.

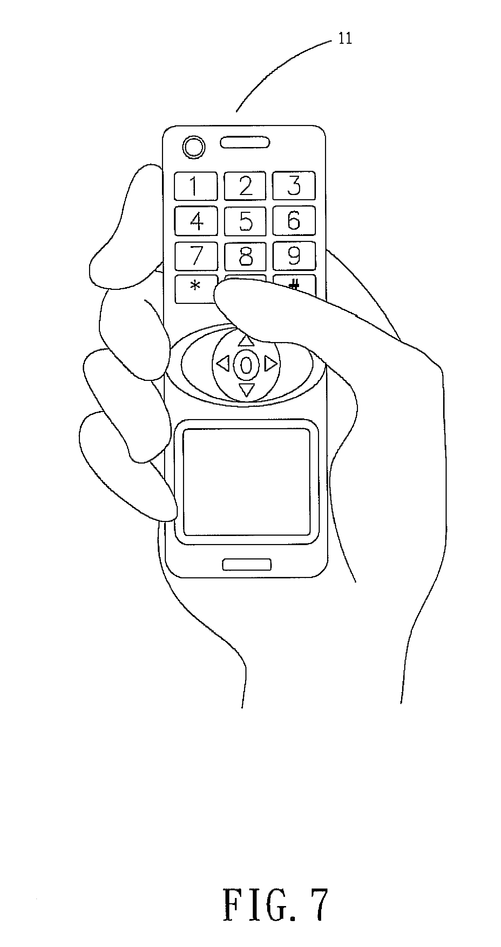

As shown in FIG. 7, an operation of the first preferred embodiment of the invention will be described in detail below. A user can correctly know a digit by touching the key of the keypad by the thumb, i.e., similar to seeing the digit printed on the key when making a call. This feature is applicable to situations including dialing in a dark environment and dialing while driving in which dialing by seeing the keys by bending the head is not desired or even impossible. This feature is also applicable to a situation in which a user can dial by touching the keys when the mobile phone 11 is placed in a cloth pocket.

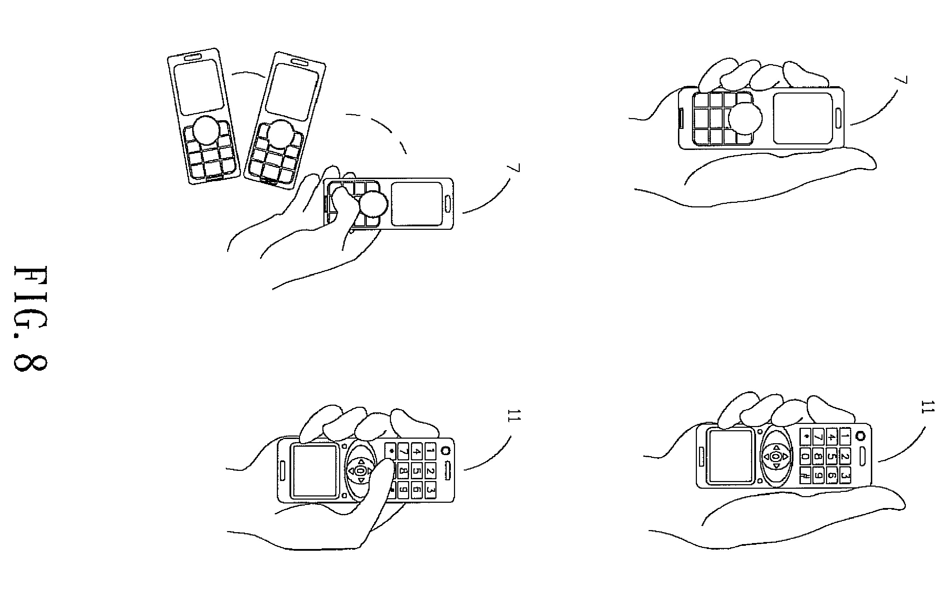

As shown in FIG. 8, it is seen that a user can easily make a call by holding and dialing the first preferred embodiment of mobile phone 11 of the invention. In comparison, the dialing of a conventional type of mobile phone 7 is much inconvenient because the user cannot correctly hold the center of gravity of the mobile phone 7.

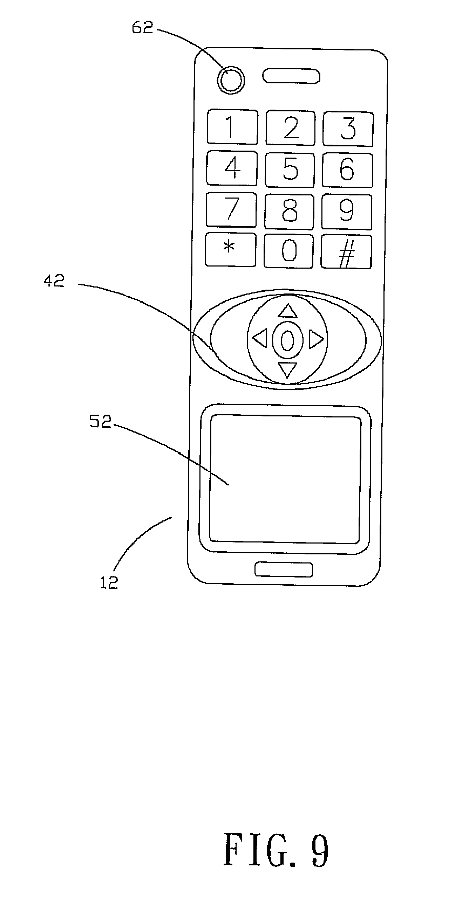

Referring to FIGS. 9 to 13, a mobile phone 12 in accordance with a second preferred embodiment of the invention is shown. The characteristics of the second preferred embodiment are detailed below. The mobile phone 12 comprises an operation section on upper and intermediate portions of the front surface thereof, and a display on a lower portion on the front surface thereof. The operation section comprises an alphanumeric keypad 22 and a direction key 42 below the keypad 22. The display is implemented as an LCD (liquid crystal display) display 52 in this embodiment or an OLED (organic light-emitting diode) display in other embodiments.

A quick dialing key 62 is provided on the top left corner of the front surface of the mobile phone 12. A user may store his or her most frequently used phone numbers in a memory card. The user may browse through the list of stored numbers shown on the display 52. Thereafter, the user may initiate a call by pressing the quick dialing key 62 after finding the desired number shown on the display 52.

It is contemplated by the invention that a user can hold the center of gravity of the mobile phone 12 by one hand by configuring the mobile phone 12 as an ergonomic one as above. Therefore, benefits including easy dialing (i.e., the thumb being naturally disposed on the key of the keypad 22 when holding the mobile phone 12) and reducing the possibility of carelessly dropping the mobile phone 12 can be obtained.

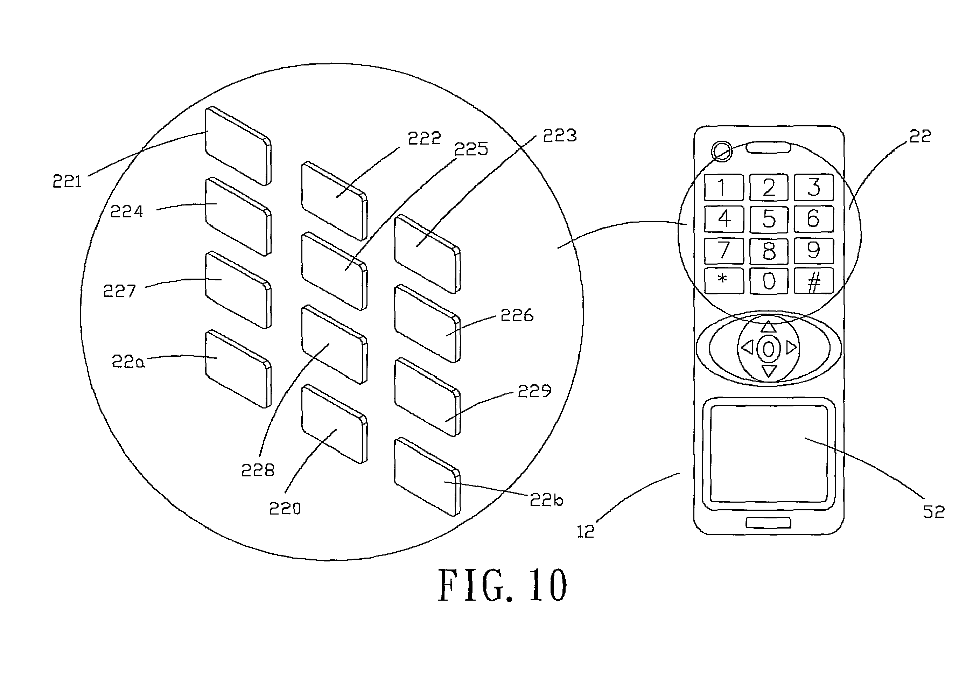

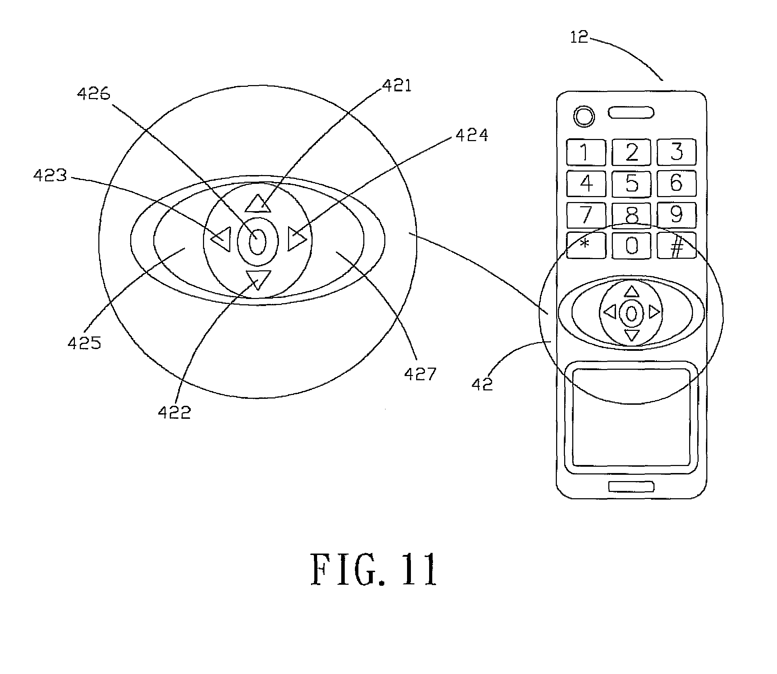

As shown in FIG. 10, the keypad 22 comprises a set of 3x4 (i.e., four rows and three columns) keys 221, 222, 223, 224, 225, 226, 227, 228, 229, 22a, 220, and 22b; and a direction key 42 (see FIG. 11). Each of the keys 221, 222, 223, 224, 225, 226, 227, 228, 229, 22a, 220, and 22b has a flat outer surface. The keypad 22 comprises 12 keys 0 to 9, * and #.

As shown in FIG. 11, the direction key 42 comprises four direction arrows 421, 422, 423, and 424; and three set keys 425, 426, and 427.

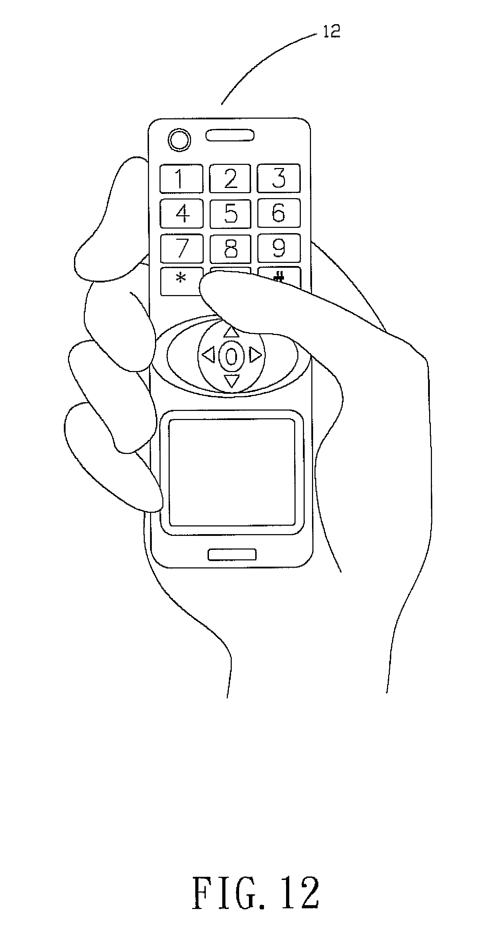

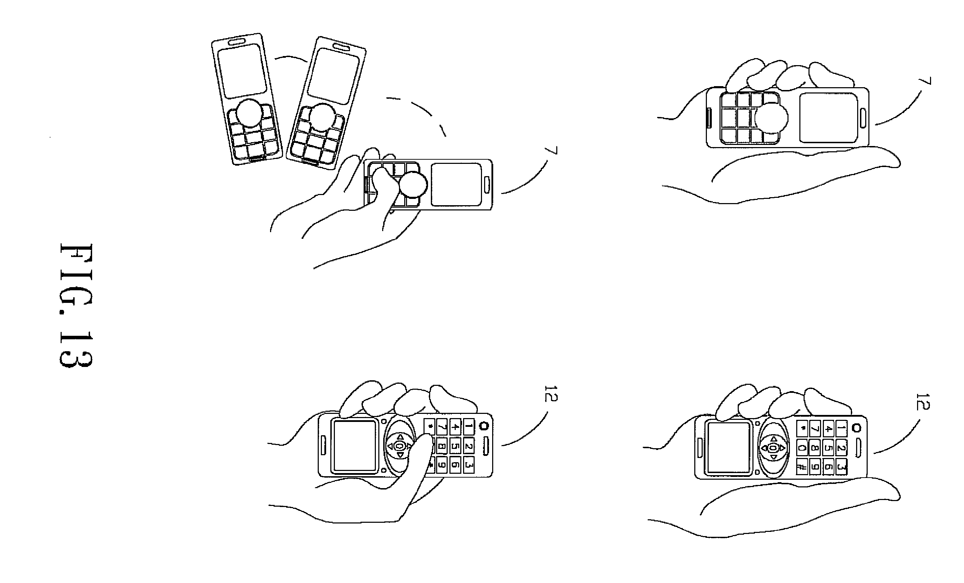

As shown in FIGS. 12 and 13, an operation of the second preferred embodiment of the invention will be described in detail below. It is seen that a user can easily make a call by holding and dialing the second preferred embodiment of mobile phone 12 of the invention. In comparison, the dialing of a conventional type of mobile phone 7 is much inconvenient because the user cannot correctly hold the center of gravity of the mobile phone 7.

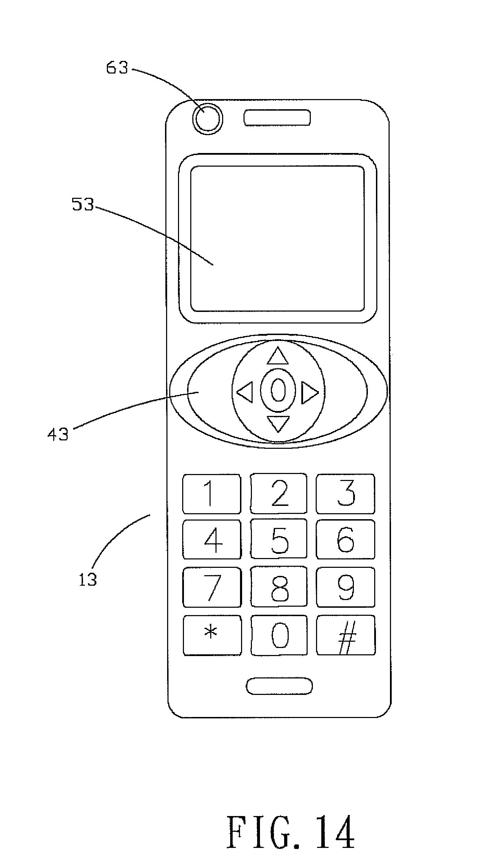

Referring to FIGS. 14 to 19, a mobile phone 13 in accordance with a third preferred embodiment of the invention is shown. The characteristics of the third preferred embodiment are detailed below. The mobile phone 13 comprises an operation section on lower and intermediate portions of the front surface thereof, and a display on an upper portion on the front surface thereof. The operation section comprises an alphanumeric keypad 231 and a direction key 43 below the keypad 231. The display is implemented as an LCD (liquid crystal display) display 53 in this embodiment or an OLED (organic light-emitting diode) display in other embodiments.

A quick dialing key 63 is provided on the top left corner of the front surface of the mobile phone 13. A user may store his or her most frequently used phone numbers in a memory card. The user may browse through the list of stored numbers shown on the display 53. Thereafter, the user may initiate a call by pressing the quick dialing key 63 after finding the desired number shown on the display 53.

It is contemplated by the invention that a user can hold the center of gravity of the mobile phone 13 by one hand by configuring the mobile phone 13 as an ergonomic one as above. Therefore, benefits including easy dialing (i.e., the thumb being naturally disposed on the key of the keypad 231 when holding the mobile phone 13) and reducing the possibility of carelessly dropping the mobile phone 13 can be obtained.

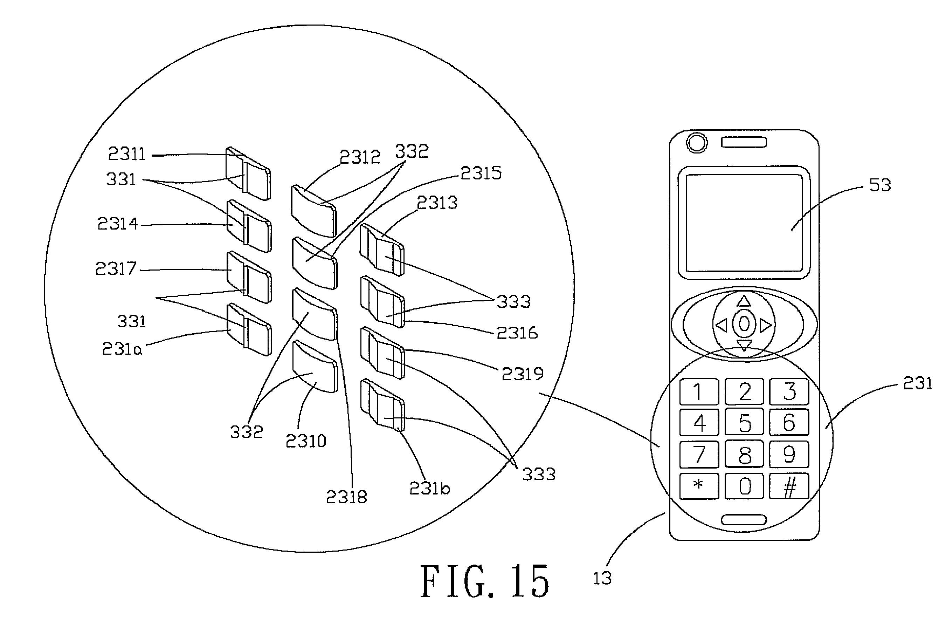

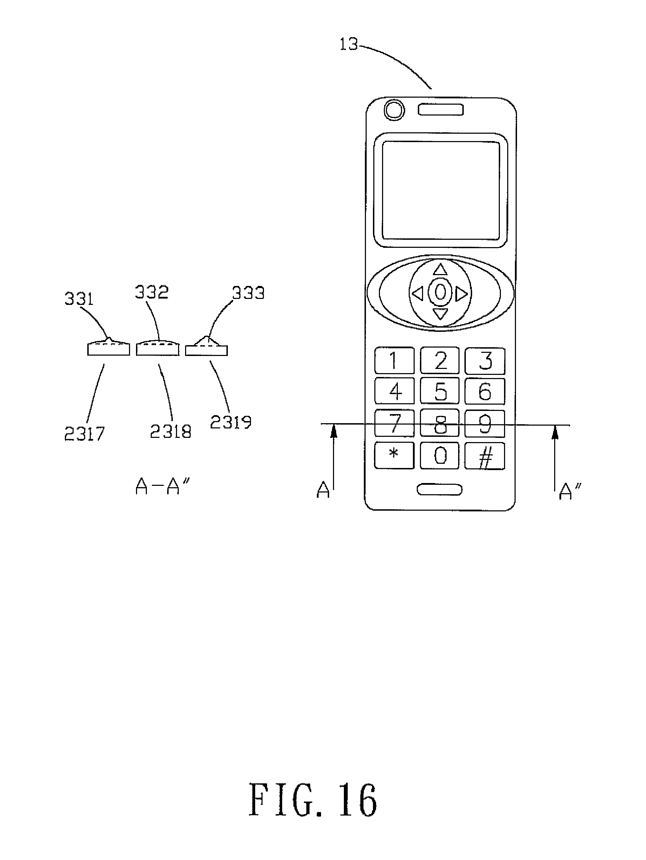

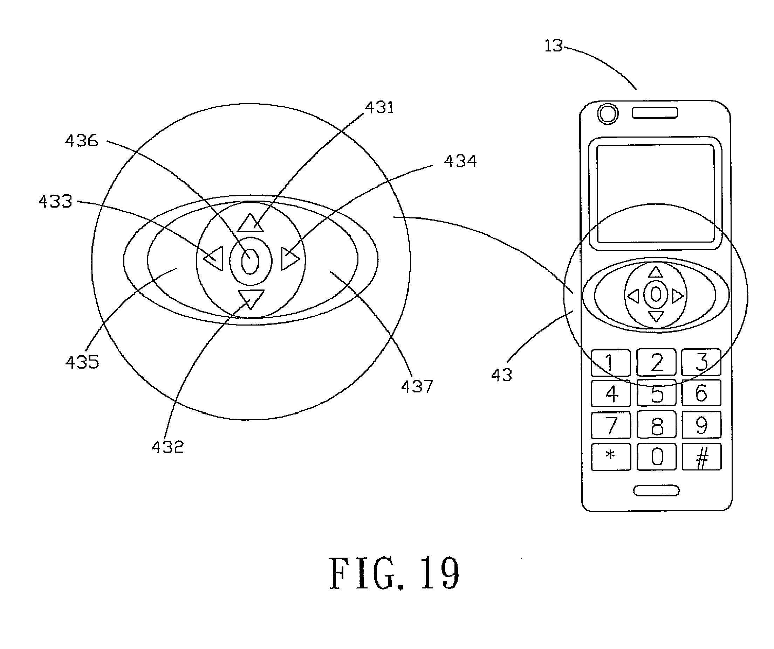

As shown in FIGS. 15 and 16, a first configuration of the keypad 231 is shown and the keypad 231 comprises a set of 3x4 (i.e., four rows and three columns) keys 2311, 2312, 2313, 2314, 2315, 2316, 2317, 2318, 2319, 231a, 2310, and 231b; and a direction key 43 (see FIG. 19). Each of the keys 2311, 2314, 2317, and 231a has a longitudinal, central ridge 331. Each of the keys 2312, 2315, 2318, and 2310 has a convex outer surface 332. Each of the keys 2313, 2316, 2319, and 231 b has a gable outer surface 333. The keypad 231 comprises 12 keys 0 to 9, * and #.

As shown in FIG. 19, the direction key 43 comprises four direction arrows 431, 432, 433, and 434; and three set keys 435, 436, and 437.

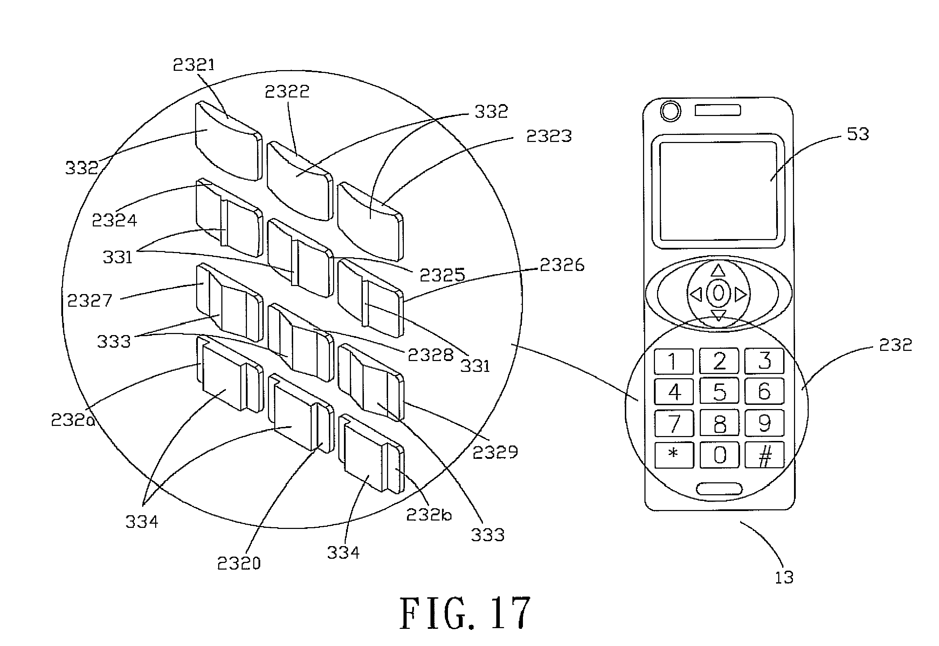

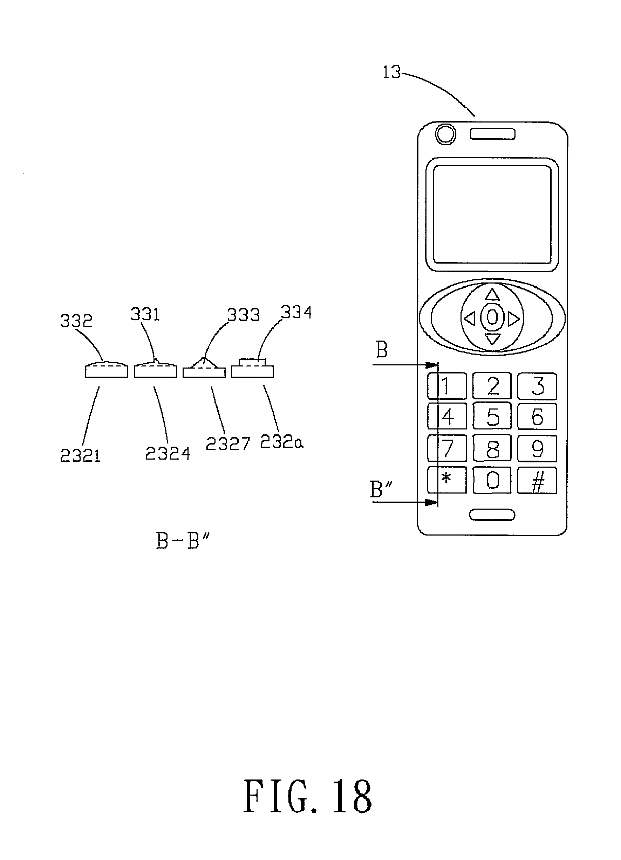

As shown in FIGS. 17 and 18, a second configuration of the keypad 232 is shown and the keypad 232 comprises a set of 3x4 (i.e., four rows and three columns) keys 2321, 2322, 2323, 2324, 2325, 2326, 2327, 2328, 2329, 232a, 2320, and 232b; and a direction key 43 (see FIG. 19). Each of the keys 2321, 2322, and 2323 has a convex outer surface 332. Each of the keys 2324, 2325, and 2326 has a longitudinal, central ridge 331. Each of the keys 2327, 2328, and 2329 has a gable outer surface 333. Each of the keys 232a, 2320, and 232b has a raised platform 334 on its outer surface The keypad 232 comprises 12 keys 0 to 9, * and #.

Operation and benefits of the third preferred embodiment of the invention are the same as that described with respect to the first preferred embodiment thereof. Therefore, a detailed description thereof is deemed unnecessary.

While the invention herein disclosed has been described by means of specific embodiments, numerous modifications and variations could be made thereto by those skilled in the art without departing from the scope and spirit of the invention set forth in the claims.

## Claims

1. A mobile telephone comprising:
an alphanumeric keypad on a first predetermined portion of a front surface thereof and including a plurality of keys arranged in rows and columns;
a direction key on a second predetermined portion of the front surface thereof; and
a display on a third predetermined portion of the front surface thereof,
wherein the keys of the keypad have an uneven surface.

2. The mobile telephone of claim 1, wherein the first predetermined portion of the front surface of the mobile telephone is an upper portion of the front surface thereof, the second predetermined portion of the front surface of the mobile telephone is an intermediate portion of the front surface thereof, and the third predetermined portion of the front surface of the mobile telephone is a lower portion of the front surface thereof.

3. The mobile telephone of claim 1, wherein the first predetermined portion of the front surface of the mobile telephone is a lower portion of the front surface thereof, the second predetermined portion of the front surface of the mobile telephone is an intermediate portion of the front surface thereof, and the third predetermined portion of the front surface of the mobile telephone is an upper portion of the front surface thereof.

4. The mobile telephone of claim, wherein the keys of the keypad are arranged in first, second, third, and fourth rows and first, second, and third columns.

5. The mobile telephone of claim 4, wherein the surface of each of the keys of the first column is a longitudinal, central ridge, the surface of each of the keys of the second column is convex, and the surface of each of the keys of the third column is gable.

6. The mobile telephone of claim 4, wherein the surface of each of the keys of the first row is convex, the surface of each of the keys of the second row is a longitudinal, central ridge, the surface of each of the keys of the third row is gable, and the surface of each of the keys of the fourth row is a raised platform.
